# EUROPEAN PATENT SPECIFICATION

(11) **EP 3 227 239 B1**
(45) Date of publication and mention of the grant of the patent: **13.02.2019**
(21) Application number: 15823772.7
(22) Date of filing: 03.12.2015
(51) Int. Cl.: C02F 11/06, C02F 1/66, C02F 1/72, C02F 1/74, C02F 11/12, C02F 11/14

(54) **PROCESS FOR THE TREATMENT OF WASTE PRODUCTS, IN PARTICULAR, DEPURATION SLUDGES**
VERFAHREN ZUR BEHANDLUNG VON ABFALLPRODUKTEN, INSBESONDERE, REINIGUNGSSCHLÄMMEN
PROCÉDÉ POUR LE TRAITEMENT DE DÉCHETS, EN PARTICULIER, DE BOUES D'ÉPURATION

(30) Priority: 04.12.2014 IT MI20142086
(43) Date of publication of application: 11.10.2017
(73) Proprietor: Newlisi S.p.A., 20121 Milano (IT)
(72) Inventor: MARINI, Roberto, I-20121 Milano (IT)
(74) Representative: Casci, Tamara
(86) International application number: PCT/IB2015/059320
(87) International publication number: WO 2016/088073

(56) References cited:
- CN-A- 103 876 165
- JP-A- S5 479 164
- JP-A- S5 787 897
- JP-A- 2002 126 755
- US-A- 4 297 216

## Description

The present invention relates to a process for the treatment of waste products, in particular depuration sludges deriving from wastewater depuration processes through treatments of the mechanical, biological and/or physico-chemical type.

As is known, wastewater, of both the urban and industrial type, must be subjected to depuration processes in order to reduce as much as possible its environmental impact, by reducing the polluting charge of both the biological and physico-chemical type. These depuration processes generally combine mechanical treatments and treatments of the biological type (for example the use of microorganisms capable of metabolizing the pollutants) and/or of the physico-chemical type (i.e. heat treatment with chemical agents that cause the decomposition of the pollutants, with the formation of products that are not environmentally hazardous). During these depuration processes, so-called "depuration sludges" accumulate, which are essentially composed of primary sludges, i.e. suspended particles found in wastewater, which can be separated at the start of the depuration process by sedimentation, and of secondary sludges, i.e. the sediments obtained after the biological and/or chemical treatment process. It should be noted that, within the context of the present description and enclosed claims, the term "depuration sludges" refers to both depuration sludges in the true sense, i.e. primary and secondary sludges deriving from a wastewater depuration plant in which physico-chemical treatments are used, and the so-called "excess sludges", i.e. primary and secondary sludges deriving from a wastewater depuration plant in which biological treatments are used.

Depending on the type of depuration process used and the nature of the wastewater treated, depuration sludges can have a considerably variable composition. The depuration sludges obtained from physico-chemical processes, for example, can contain a considerable quantity of inorganic products, such as, for example, hydrated lime and flocculants, usually iron and/or aluminium salt-based, as well as organic polyelectrolyte-based coagulants, generally added to aid the flocculation and sedimentation of the particulate and to capture and separate any organic contaminants present in the wastewater to be depurated. In other cases, in particular when depuration processes of the biological type are used, depuration sludges essentially contain organic products having a complex structure, such as proteins, glycoproteins, lipids, carbohydrates, polysaccharides and the like.

The treatment and disposal of depuration sludges represent a considerable problem from the environmental and economic point of view, and significantly affect the operating costs of a wastewater depuration plant. Such sludges are normally disposed of via mechanical dehydration and subsequent incineration, alone or mixed with the organic fraction of the urban waste, or deposited in landfills with obvious costs and considerable environmental risks. In the case of sludges having a high content of organic matter, these can be suitable for the production of fertilizers for agricultural use, usually after undergoing an adequate composting process, obviously only if their characteristics comply with the requirements of the law in force for this type of soil improvers. However, these sludges often have a content of polluting products, in particular heavy metals and/or other toxic products, which is too high to allow their reuse in agriculture.

Processes are known for the treatment of various kinds of waste products, depuration sludges in particular, which lower the content of chemical and/or biological pollutants and lower to a significant extent the volume of the sludges themselves.

The process described in international patent application WO 2011/036550, in the name of the same Applicant, is particularly effective. Such process comprises the following steps: (a) acid oxidizing hydrolysis of the incoming charge; (b) alkaline oxidizing hydrolysis of the outgoing charge from the acid oxidizing hydrolysis step; (c) chemically conditioning the outgoing charge from the alkaline oxidizing hydrolysis step; (d) separating the undissolved residue, if any. Through such process, it is possible to completely oxidize a high percentage of the organic fraction present in the sludges, with the formation of carbon dioxide and water, whereas the remaining fraction is transformed into water-soluble compounds that are not harmful for the environment. Any solid residue remaining after the treatment can be easily separated through common mechanical dehydration, sedimentation or filtration techniques, and can be used, for example, as a soil improver in agriculture, subject to compliance with the law requirements.

The Applicant has now considered the problem of improving the process according to WO 2011/036550, in particular with respect to the yields in terms of the reduction of the suspended solid products and the reduction in the consumption of chemical reagents, which can be high, especially in the chemical conditioning step of the outgoing charge from the alkaline oxidizing hydrolysis step. During this step, in fact, the pH must be lowered to substantially neutral values, so as to obtain, at the end of the process, a neutral product that can be easily disposed of. In addition, this neutralization step allows the treated fluid to be sent to a heat recovery step, useful for guaranteeing an advantageous energy balance for the economy of the overall process, which is advantageously carried out on a substantially neutral fluid in order to avoid corrosion problems of the heat exchangers.

The Applicant has now found that these and other objectives can be achieved by carrying out a separation step on the outgoing charge from the acid oxidizing hydrolysis step, from which the following are obtained: (a) an acid liquid phase which is sent to the neutralization step of the outgoing charge from the alkaline oxidizing hydrolysis step; and (b) a solid phase which is sent as charge to the alkaline oxidizing hydrolysis step. In this way, a considerable reduction in the volume of the ingoing charge to the alkaline oxidizing hydrolysis step is obtained, and consequently a considerable reduction in the consumption of alkaline reagent required for bringing the charge to the pH value necessary for carrying out the alkaline oxidizing hydrolysis. At the same time, sending the acid liquid phase to the neutralization step allows a drastic reduction in the consumption of acid reagent required for the neutralization of the outgoing charge from the alkaline oxidizing hydrolysis step. Depending on the specific process conditions, the acid liquid phase can be sufficient for obtaining the desired neutralization, whereas in other cases, it may nevertheless be necessary to add a fresh acid reagent, the consumption of which is, in any case, considerably reduced.

The present invention therefore relates to a process for the treatment of waste products, in particular depuration sludges, comprising:
performing an acid oxidizing hydrolysis of an incoming waste charge;
performing an alkaline oxidizing hydrolysis of the outgoing charge from the acid oxidizing hydrolysis step;
neutralizing the outgoing charge from the alkaline oxidizing hydrolysis step;
separating the solid residue, if any, remaining after the neutralization step;
wherein the outgoing charge from the acid oxidizing hydrolysis step is subjected to a separation step so as to obtain: (a) an acid liquid phase which is fed to the neutralization step of the outgoing charge from the alkaline oxidizing hydrolysis step; and (b) a solid phase which is fed as charge to the alkaline oxidizing hydrolysis step.

According to a preferred embodiment, the outgoing charge from the neutralization step is sent to a heat-exchange step to recover the heat present in the charge itself, which can be used, for example, for preheating the ingoing charge to the acid oxidizing hydrolysis step.

The process according to the present invention is preferably carried out for the treatment of depuration sludges, in particular depuration sludges obtained following a depuration process of wastewater, of an urban and/or industrial origin, where said depuration process can be carried out by means of physico-chemical and/or biological means.

Even if the process of the present invention is intended in particular for the treatment of depuration sludges, it can also be used for the treatment of other waste products, in particular waste products having a high content of organic matter, such as: organic residues deriving from the processing of plant products, for example processing scraps of the agro-food industry; leachate deriving from urban and/or industrial waste landfills; whey; the organic fraction of solid urban waste (SUW).

The waste products to be treated can be possibly subjected to a preliminary mechanical disintegration step, in which the waste products are chopped in order to pulp and tear any solids present and break up the flake-like structures formed by the microorganisms present in large quantity, especially if the waste products are depuration sludges of the biological type (i.e. excess sludges). This mechanical disintegregation step is advantageous as it allows a reduction in the duration of the subsequent acid and alkaline treatments, with an increase in the overall process yields.

The acid oxidizing hydrolysis step allows to obtain an almost complete oxidation of the substances susceptible to oxidation at acid pH and to chemically modify the non-oxidized residual material so as to make it more easily attackable by the subsequent alkaline oxidizing treatment. In particular, the acid oxidizing hydrolysis step allows the oxidation of: polysaccharides, in particular cellulose and derivatives and polyglucosides; glycerides and other fatty acid esters; proteins, and in particular complex proteins such as glycoproteins, lipoproteins, phospholipids, sulfoproteins, sulfurated substances such as sulfonated, sulfitated, sulfatated compounds, thioderivatives, sulfones; phenolic and polyphenolic derivatives; etc.

The acid oxidizing hydrolysis step is preferably carried out at a pH value ranging from 0.1 to 5.0, more preferably from 1.0 to 3.5. The temperature in such step is preferably comprised between 35°C and 100°C, more preferably between 50°C and 90°C. The mass to be treated is preferably kept in motion by means of mechanical stirring, while the duration of the treatment can vary within wide ranges depending on the characteristics of the specific waste product to be treated (generally a time ranging from 40 minutes to 360 minutes is sufficient).

The charge of the incoming waste products is acidified to a desired pH value by the addition of an organic or inorganic acid compound. It can be selected, for example, from: hydrohalic acids (for example HCl, HBr); oxygenated mineral acids of nitrogen, phosphorus, sulfur, halogens (for example H₂SO₄, HNO₃, H₃PO₄, HClO₄, etc.); acid sulfates and phosphates of alkali and/or alkaline earth metals; mono- and di-carboxylic acids (for example formic acid, acetic acid, chloroacetic acid, oxalic acid, malonic acid, succinic acid, glutaric acid, adipic acid, tartaric acid, maleic acid, fumaric acid); and the like. Such acid compounds are usually fed into the charge to be treated in the form of aqueous dispersions or solutions.

The subsequent alkaline oxidizing hydrolysis step allows further degradation of the substances remaining after the acid oxidizing hydrolysis step through hydrolysis (saponification) and oxidation, at the same time allowing to obtain the precipitation of the heavy metals oxidized in the acid step, with the formation of the corresponding insoluble hydroxides in an aqueous environment. For example, in this step, the aglycons released during the previous acid step, the organic compounds containing amide bonds, complex cell proteins, peptones, triglycerides not hydrolyzed or only partially hydrolyzed in the acid phase, etc are oxidised.

The alkaline oxidizing hydrolysis step is preferably carried out at a pH value ranging from 8.0 to 12.0, more preferably from 9.0 to 11.0. In this step, the temperature is preferably comprised between 35°C and 100°C, more preferably between 50°C and 90°C. The mass to be treated is preferably kept in motion by means of mechanical stirring, while the duration of the treatment can vary within wide ranges depending on the characteristics of the specific waste product to be treated (generally a time ranging from 40 to 360 minutes is sufficient).

The charge obtained from the previous acid oxidizing hydrolysis step can be brought to the desired pH value by the addition of an organic or inorganic alkaline compound, selected for example from: hydroxides of alkali or alkaline-earth metals; basic reaction salts, such as carbonates, silicates, borates, phosphates; alcoholates or carboxylates of alkali or alkaline-earth metals; and the like. Such alkaline compounds are generally fed into the charge to be treated in the form of aqueous dispersions or solutions.

Both the acid and alkaline oxidation steps require the addition of an oxidizing agent to the ingoing charge, which can be the same for both steps or different, and can be preferably selected from:
(a) air or oxygen-enriched air insufflated into the mass to be treated, or liquid oxygen re-gasified in situ, which, in an acid environment gives rise to the following redox semi-reaction:

   O₂ + 4H⁺ + 4e⁻ ------> 2 H₂O
(b) an inorganic peroxide, selected, for example, from: hydrogen peroxide (H₂O₂), ozone, perborates, percarbonates, perurea, peroxymonosulfates, peroxydisulfates; peroxyphosphates;
(c) an organic peroxide selected, for example, from: peracids, monoalkyl peroxides, dialkyl peroxides, acyl peroxides, cyclic peroxides, ozonides.
(d) non-peroxide inorganic oxidizing compounds such as hypochlorites, chlorites, chlorates, permanganates.

In accordance with the present invention, the outgoing charge from the acid oxidizing hydrolysis step is subjected to a separation step so as to obtain: (a) an acid liquid phase which is sent to the neutralization step of the outgoing charge from the alkaline oxidizing hydrolysis step; and (b) a solid phase which is sent as charge to the alkaline oxidizing hydrolysis step. An alkaline compound is therefore added to the solid phase (b) so as to obtain the desired pH value. The fact of having previously separated the acid liquid phase (a) allows the considerable reduction in the volumes to be treated and, above all, in the consumption of the reagents, i.e. of the alkaline compound and of the oxidizing agent, with evident advantages in operational and economic terms.

The separation step carried out on the outgoing charge from the acid oxidizing hydrolysis step can be carried out by means of known devices, such as for example settlers, filters, dynamic thickeners, centrifuges or other devices.

In order to improve the yield of the separation step, so as to obtain a substantially complete separation of the suspended solids, thus preventing these, by remaining in suspension, from being introduced into the neutralization step without being subjected to the alkaline oxidizing hydrolysis step, it may be advantageous to add at least one flocculant to the outgoing charge from the acid oxidizing hydrolysis step, which allows to entrain and aggregate the suspended solids so as to separate them in a substantially complete manner. As the charge to be subjected to the separation step is strongly acidic, it is not possible to use commonly used flocculants such as lime, and it is therefore preferable to use cationic or anionic polyelectrolytes, products which are well-known in the art.

The acid liquid phase obtained from the separation step is fed to the neutralization step of the outgoing charge from the alkaline oxidizing hydrolysis step, so as to obtain the conditioning of the charge until a pH value close to neutrality is obtained (generally from 5.5 to 7.5).

In some cases, particularly when the volume of the outgoing charge from the alkaline oxidizing hydrolysis step is considerably reduced with respect to the volume of the acid liquid phase (a) obtained from the separation step, it may be necessary to feed an alkaline solution to the neutralization step, in such a quantity as to obtain the desired pH value.

The outgoing charge from the neutralization step, still warm, is preferably sent to a heat exchange step in order to recover heat to be used for the previous oxidizing hydrolysis steps. It should be noted that the outgoing charge from the neutralization step is still warm owing to both the heat supplied in the previous oxidizing hydrolysis steps, and the heat developed during the neutralization step, given that the acid-base reaction is exothermic.

Finally, the outgoing charge at the end of the treatment can be optionally subjected to a further separation step in order to separate any solid residue that may have remained after the treatment. The separation can be carried out, also in this case, by means of settlers, filters, dynamic thickeners, centrifuges or other devices.

Any solid residue thus obtained can be subjected to pressing and/or other mechanical or thermal dehydration processes, and used for different purposes, depending on its composition, for example, as soil improver in agriculture.

The outgoing liquid phase from the further separation step can be disposed of according to the regulations in force, without the need for any particular arrangements as its chemical and biological characteristics are not particularly critical.

The above-mentioned liquid phase can also be re-used, for example through recycling to an optional depuration process that is carried out upstream of the treatment process according to the present invention, said liquid phase generally having such characteristics as not to significantly disturb the depuration process. In some cases, instead, this liquid phase requires suitable re-conditioning in order to eliminate any products present that can affect the depuration process, in particular when this is a depuration process of the biological type, which requires an extremely accurate control of the operating conditions of the microorganisms responsible for the depuration of the wastewater.

The present invention will now be further described with reference to the following figures, in which:

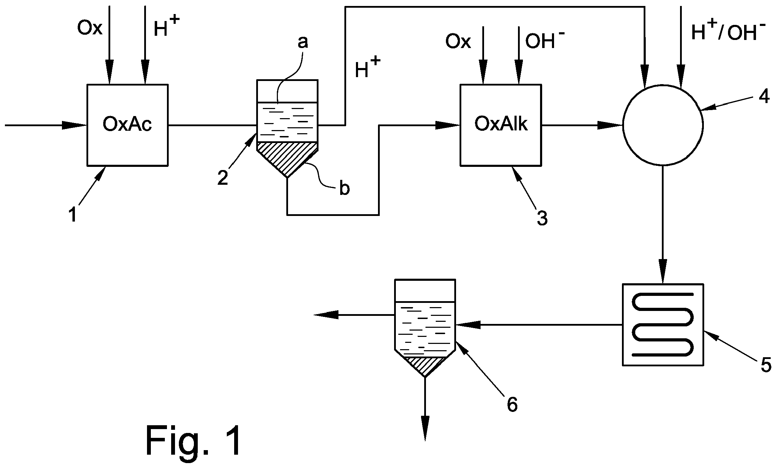

Figure 1 is a schematic representation of the process according to the present invention.

With reference to Figure 1, the incoming charge of waste products, optionally previously subjected to a mechanical disintegration step as indicated above, is fed to a first reactor (1) where the acid oxidizing hydrolysis step (OxAc) is carried out by introducing an acidic compound and an oxidizing agent, as described above, into the reactor, and maintaining the temperature at the pre-established value.

The outgoing charge from the acid oxidizing hydrolysis step is then subjected to a separation step as described above, for example by introduction into a first settler (2) where the separation of an acid liquid phase (a) and a solid phase (b) takes place. The latter is fed to a second reactor (3) and subjected to the alkaline oxidizing hydrolysis step (OxAlk), by introducing an alkaline compound and an oxidizing agent, as described above, into the reactor, and maintaining the temperature at the pre-established value. The acid liquid phase (a), on the other hand, is fed to a neutralization reactor (4), situated downstream of the second reactor (3). As illustrated in Figure 1, a further acid compound can be optionally fed to the neutralization reactor (4), if the acid liquid phase (a) is not sufficient for obtaining the desired conditioning of the outgoing charge from the second reactor (3). In other cases, an alkaline compound can be optionally fed to the neutralization reactor (4), if the acid liquid phase (a) is in excess with respect to the quantity of alkaline charge to be neutralized.

Once it is neutralized, the charge is then preferably subjected to a heat-exchange step in a heat exchanger (5), so as to recover the heat present in the charge, owing to both the heating deriving from the previous acid and alkaline oxidizing hydrolysis steps and also the neutralization heat developed during neutralization in the mixer (4).

Finally, the outgoing charge from the heat exchanger (5), in the case where it still contains a significant quantity of solid residues, is sent to a further separation step carried out, for example, in a second settler (6). The solid residue is then discharged from the bottom of the settler (6) and sent to further transformation steps as illustrated above, while the supernatant liquid phase can be disposed of or re-used as already described, for example through pumping to a depuration process from which the treated waste product can derive.

## Claims

1. Process for treating waste products, comprising:
performing an acid oxidizing hydrolysis of an incoming waste charge;
performing an alkaline oxidizing hydrolysis of the outgoing charge from the acid oxidizing hydrolysis step;
neutralizing the outgoing charge from the alkaline oxidizing hydrolysis step;
separating a solid residue, if any, remaining after the neutralization step;
wherein the outgoing charge from the acid oxidizing hydrolysis step is subjected to a separation step so as to obtain: (a) an acid liquid phase which is fed to the neutralization step of the outgoing charge from the alkaline oxidizing hydrolysis step; and (b) a solid phase which is fed as charge to the alkaline oxidizing hydrolysis step.

2. Process according to claim 1, wherein the waste products to be treated are depuration sludges obtained from a wastewater depuration process.

3. Process according to any one of the preceding claims, wherein the outgoing charge from the neutralization step is fed to a heat exchange step to recover heat from the charge itself.

4. Process according to any one of the preceding claims, wherein the acid oxidizing hydrolysis step is carried out at a pH value ranging from 0.1 to 5.0, preferably from 1.0 to 3.5.

5. Process according to any one of the preceding claims, wherein the acid oxidizing hydrolysis step is carried out at a temperature comprised between 35°C and 100°C, preferably between 50°C and 90°C.

6. Process according to any one of the preceding claims, wherein the alkaline oxidizing hydrolysis step is carried out at a pH value ranging from 8.0 to 12.0, preferably from 9.0 to 11.0.

7. Process according to any one of the preceding claims, wherein the alkaline oxidizing hydrolysis step is carried out at a temperature comprised between 35°C and 100°C, preferably between 50°C and 90°C.

8. Process according to any one of the preceding claims, wherein the alkaline and acid oxidizing hydrolysis steps comprise the addition to the ingoing charge of an oxidizing agent, the same or different for said steps.

9. Process according to any one of the preceding claims, wherein the oxidizing agent is selected from:
(a) air or oxygen-enriched air, or liquid oxygen regasified in situ;
(b) an inorganic peroxide;
(c) an organic peroxide;
(d) non-peroxidic inorganic oxidizing compounds.

10. Process according to any one of the preceding claims, wherein the separation step performed on the outgoing charge from the acid oxidizing hydrolysis step is carried out in a device selected from: settlers, filters, dynamic thickeners, centrifuges.

11. Process according to any one of the preceding claims, which further comprises adding at least one flocculating agent to the outgoing charge from the acid oxidizing hydrolysis step.

12. Process according to any one of the preceding claims, wherein the acid liquid phase obtained from the separation step is fed to the neutralization step of the outgoing charge from the alkaline oxidizing hydrolysis step, so as to obtain conditioning of the charge to obtain a pH value ranging from 5.5 to 7.5.

13. Process according to any one of the preceding claims, wherein the outgoing charge at the end of the treatment is subjected to a further separation step, in order to separate any solid residue that may have remained after the treatment.

## Patentansprüche

1. Verfahren zur Behandlung von Abfallprodukten, umfassend:
Durchführen einer sauren oxidierenden Hydrolyse einer eintreffenden Abfallcharge;
Durchführen einer alkalischen oxidierenden Hydrolyse der aus dem Schritt der sauren oxidierenden Hydrolyse ausgehenden Charge;
Neutralisieren der aus dem Schritt der alkalischen oxidierenden Hydrolyse ausgehenden Charge;
Abtrennen eines ggf. nach dem Neutralisierungsschritt verbleibenden festen Rückstands;
wobei die aus dem Schritt der sauren oxidierenden Hydrolyse ausgehende Charge einem Trennschritt unterzogen wird, um Folgendes zu erhalten: (a) eine saure flüssige Phase, die im Neutralisierungsschritt der aus dem Schritt der alkalischen oxidierenden Hydrolyse ausgehenden Charge zugeführt wird; und (b) eine feste Phase, die als Charge dem Schritt der alkalischen oxidierenden Hydrolyse zugeführt wird.

2. Verfahren nach Anspruch 1, wobei die zu behandelnden Abfallprodukte Klärschlämme sind, die bei einem Abwasserreinigungsverfahren erhalten werden.

3. Verfahren nach einem der vorstehenden Ansprüche, wobei die aus dem Neutralisierungsschritt ausgehende Charge einem Wärmeaustauschschritt zugeführt wird, um Wärme aus der Charge zurückzugewinnen.

4. Verfahren nach einem der vorstehenden Ansprüche, wobei der Schritt der sauren oxidierenden Hydrolyse bei einem pH-Wert im Bereich von 0,1 bis 5,0, vorzugsweise von 1,0 bis 3,5 ausgeführt wird.

5. Verfahren nach einem der vorstehenden Ansprüche, wobei der Schritt der sauren oxidierenden Hydrolyse bei einer Temperatur zwischen 35°C und 100°C, vorzugsweise zwischen 50°C und 90°C ausgeführt wird.

6. Verfahren nach einem der vorstehenden Ansprüche, wobei der Schritt der alkalischen oxidierenden Hydrolyse bei einem pH-Wert im Bereich von 8,0 bis 12,0, vorzugsweise von 9,0 bis 11,0 ausgeführt wird.

7. Verfahren nach einem der vorstehenden Ansprüche, wobei der Schritt der alkalischen oxidierenden Hydrolyse bei einer Temperatur zwischen 35°C und 100°C, vorzugsweise zwischen 50°C und 90°C ausgeführt wird.

8. Verfahren nach einem der vorstehenden Ansprüche, wobei die Schritte der alkalischen und der sauren oxidierenden Hydrolyse das Hinzufügen eines für die genannten Schritte gleichen oder unterschiedlichen Oxidationsmittels in die ausgehende Charge umfassen.

9. Verfahren nach einem der vorstehenden Ansprüche, wobei das Oxidationsmittel ausgewählt ist aus:
(a) Luft oder sauerstoffangereicherter Luft oder in situ in den gasförmigen Zustand zurückversetztem Flüssigsauerstoff;
(b) einem anorganischen Peroxid;
(c) einem organischen Peroxid;
(d) nicht-peroxidischen anorganischen oxidierenden Verbindungen.

10. Verfahren nach einem der vorstehenden Ansprüche, wobei der Trennschritt, der an der aus dem Schritt der sauren oxidierenden Hydrolyse ausgehenden Charge vorgenommen wird, in einer Vorrichtung ausgeführt wird, die ausgewählt ist aus: Absetzvorrichtungen, Filtern, dynamischen Verdickungsvorrichtungen, Zentrifugen.

11. Verfahren nach einem der vorstehenden Ansprüche, welches ferner das Hinzufügen eines Flockungsmittels in die aus dem Schritt der sauren oxidierenden Hydrolyse ausgehenden Charge umfasst.

12. Verfahren nach einem der vorstehenden Ansprüche, wobei die im Trennschritt erhaltene saure flüssige Phase im Neutralisierungsschritt der aus dem Schritt der alkalischen oxidierenden Hydrolyse ausgehenden Charge zugeführt wird, damit die Aufbereitung der Charge bewirkt wird, um einen pH-Wert im Bereich von 5,5 bis 7,5 zu erhalten.

13. Verfahren nach einem der vorstehenden Ansprüche, wobei die ausgehende Charge am Ende der Behandlung einem weiteren Trennschritt unterzogen wird, um alle festen Rückstände zu trennen, die nach der Behandlung zurückgeblieben sein könnten.

## Revendications

1. Procédé pour le traitement de déchets comprenant :
la réalisation d'une hydrolyse oxydante acide d'une charge de déchets entrante ;
la réalisation d'une hydrolyse oxydante alcaline de la charge sortante de l'étape d'hydrolyse oxydante acide ;
la neutralisation de la charge sortante de l'étape d'hydrolyse oxydante alcaline ;
la séparation d'un résidu solide, le cas échéant, restant après l'étape de neutralisation ;
dans lequel, la charge sortante de l'étape d'hydrolyse oxydante acide est soumise à une étape de séparation afin d'obtenir : (a) une phase liquide acide qui est alimentée dans l'étape de neutralisation de la charge sortante de l'étape d'hydrolyse oxydante alcaline ; et (b) une phase solide qui est alimentée comme charge dans l'étape d'hydrolyse oxydante alcaline.

2. Procédé selon la revendication 1, dans lequel les déchets à traiter sont des boues d'épuration obtenues à partir d'un procédé d'épuration des eaux usées.

3. Procédé selon l'une quelconque des revendications précédentes, dans lequel la charge sortante de l'étape de neutralisation est alimentée dans une étape d'échange de chaleur pour récupérer la chaleur de la charge elle-même.

4. Procédé selon l'une quelconque des revendications précédentes, dans lequel l'étape d'hydrolyse oxydante acide est réalisée à une valeur de pH comprise entre 0,1 et 5,0, de préférence entre 1,0 et 3,5.

5. Procédé selon l'une quelconque des revendications précédentes, dans lequel l'étape d'hydrolyse oxydante acide est réalisée à une température comprise entre 35 °C et 100 °C, de préférence entre 50 °C et 90 °C.

6. Procédé selon l'une quelconque des revendications précédentes, dans lequel l'étape d'hydrolyse oxydante alcaline est réalisée à une valeur de pH comprise entre 8,0 et 12,0, de préférence entre 9,0 et 11,0.

7. Procédé selon l'une quelconque des revendications précédentes, dans lequel l'étape d'hydrolyse oxydante alcaline est réalisée à une température comprise entre 35 °C et 100 °C, de préférence entre 50 °C et 90 °C.

8. Procédé selon l'une quelconque des revendications précédentes, dans lequel les étapes d'hydrolyse oxydante alcaline et acide comprennent l'ajout à la charge entrante d'un agent oxydant, identique ou différent pour lesdites étapes.

9. Procédé selon l'une quelconque des revendications précédentes, dans lequel l'agent oxydant est choisi parmi :
(a) l'air ou l'air enrichi en oxygène ou l'oxygène liquide regazéifié in situ ;
(b) un peroxyde inorganique ;
(c) un peroxyde organique ;
(d) des composés oxydants inorganiques non peroxydés.

10. Procédé selon l'une quelconque des revendications précédentes, dans lequel l'étape de séparation réalisée sur la charge sortante de l'étape d'hydrolyse oxydante acide est réalisée dans un dispositif choisi parmi : des décanteurs, des filtres, des épaississants dynamiques, des centrifugeuses.

11. Procédé selon l'une quelconque des revendications précédentes, qui comprend en outre l'ajout d'au moins un agent de floculation à la charge sortante de l'étape d'hydrolyse oxydante acide.

12. Procédé selon l'une quelconque des revendications précédentes, dans lequel la phase liquide acide issue de l'étape de séparation est alimentée dans l'étape de neutralisation de la charge sortante de l'étape d'hydrolyse oxydante alcaline, de sorte à obtenir un conditionnement de la charge afin d'obtenir une valeur de pH comprise entre 5,5 et 7,5.

13. Procédé selon l'une quelconque des revendications précédentes, dans lequel la charge sortante à la fin du traitement est soumise à une étape supplémentaire de séparation, afin de séparer tout résidu solide qui aurait pu rester après le traitement.
